# EUROPEAN PATENT APPLICATION

(11) **EP 4 660 544 A1**
(43) Date of publication of application: **10.12.2025**
(21) Application number: 24833403.9
(22) Date of filing: 01.08.2024
(51) Int. Cl.: F24D 13/02

(54) **ELECTRIC HEATING PANEL AND ELECTRIC HEATING SYSTEM**

(30) Priority: 23.04.2024 CN 202420853881 U
(71) Applicant: SUZHOU HANANO MATERIALS TECHNOLOGY CO., LTD., Suzhou, Jiangsu 215000 (CN)
(72) Inventor: SHEN, Zhenhui, Suzhou, Jiangsu 215000 (CN); CHEN, Xinjiang, Suzhou, Jiangsu 215000 (CN); LI, Feng, Suzhou, Jiangsu 215000 (CN); BIAN, Yongjun, Suzhou, Jiangsu 215000 (CN); SUN, Yi, Suzhou, Jiangsu 215000 (CN)
(74) Representative: De Vries & Metman
(86) International application number: PCT/CN2024/109169
(87) International publication number: WO 2025/222675

(57) **Abstract**

The present invention provides an electric heating board and an electric heating system which comprising a board body, wherein the board body includes a bottom layer, a heat preservation layer, a self-temperature-limiting heating body, a conductive shielding layer, an insulation layer and a surface layer which are sequentially arranged, the surface layer is an A-grade flame retardant material layer and is formed by a metal board, and the bottom layer is an A-grade flame retardant material layer. The electric heating board according to the present invention is particularly suitable for wall surface heating renovation or ceiling heating renovation, is convenient to construct, has an excellent flame retardant effect, is not prone to deformation, such as hollowing, or the like, after used for a long time, and further fundamentally solves the problem of tripping of a leakage protector caused by an overlarge leakage current.

## Description

### TECHNICAL FIELD

The present application relates to the field of electric heating technologies, and in particular, to an electric heating board and an electric heating system.

### BACKGROUND

With social development, people have higher and higher requirements for a comfort level of a living environment, and control over an indoor temperature is an important aspect. In order to meet the requirement, various heating devices emerge, and an electric heating wallboard is a novel heating mode rising in recent years, and has the advantages of quick heating, high heating comfort, no room blowing sense, or the like, compared with traditional air-conditioner heating; compared with later-mounted underfloor heating, a floor is not required to be replaced, mounting is more convenient and faster, heating is rapider, and a better market development prospect is realized.

Generally, a traditional electric heating wallboard structurally includes a board body and a frame enclosing the board body, the board body includes a bottom layer, a heating film and a surface layer, the surface layer is usually made of a plank, cotton cloth, plastic, or the like, a flame retardant performance of a product is not up to standard, and coverage overheating is quite prone to occurrence to cause major potential safety hazards. Meanwhile, the wallboard is prone to hollowing deformation, and thus has insufficient heat preservation, and even has no heat preservation layer and no grounding electrode, and a leakage current is overlarge to cause tripping of a leakage protector, or the like.

In the prior art, some solutions are proposed, such as adoption of a material with a higher fireproof grade (for example, a B1-grade flame retardant material, such as an epoxy board, jute, or the like) instead of the plank surface layer, or addition of reinforcing ribs on a back surface of the bottom layer for supporting to prevent the hollowing deformation of the wallboard.

However, in practical applications, there still exist a number of problems:
1) although the existing fireproof material can improve a fireproof performance of a wall heating system to a certain degree, an A-grade flame retardant requirement cannot be met;
2) although an existing reinforcing rib structure can reduce occurrence of a hollowing phenomenon, the hollowing phenomenon can still be caused when a facing material expands with heat and contracts with cold after long-time use;
3) the existing structure cannot solve the leakage current of a distributed capacitor fundamentally, and the tripping of the leakage protector may still exist;
4) the existing structure has no reliable grounding apparatus and does not meet 3C standard requirements; and
5) a high-power heating system is used in the existing structure, and the safety problem that local coverage overheating causes a fire exists.

### SUMMARY

Objective of invention: in order to solve the defects of the prior art, there are provided an electric heating board and an electric heating system which have a good flame retardant effect and are not prone to deformation after long-time use, and the electric heating board is quite suitable for wall surface heating renovation or ceiling heating renovation.

Technical solution: in order to solve the above technical problem, the following technical solution is adopted in the present application:
an electric heating board includes a board body, wherein the board body includes a bottom layer, a heat preservation layer, a self-temperature-limiting heating body, a conductive shielding layer, an insulation layer and a surface layer which are sequentially arranged, the surface layer is an A-grade flame retardant material layer and is formed by a metal board, and a hole structure is formed inside the metal board; the bottom layer is an A-grade flame retardant material layer.

By applying the above solution, the whole electric heating board has an excellent flame retardant effect, is not prone to deformation, such as hollowing, or the like, after used for a long time, and meanwhile fundamentally solves the problem of tripping of a leakage protector caused by an overlarge leakage current.

In some specific implementations, power density of the self-temperature-limiting heating body is 100W/m²-1,500W/m², and PTC strength of the self-temperature-limiting heating body is as follows: R₅₀/R₂₀ is greater than or equal to 1, such that the electric heating board not only has a good heating effect, but also has a self-temperature-limiting characteristic and is safer.

Preferably, the power density of the self-temperature-limiting heating body is 200W/m²-800W/m², and the PTC strength is as follows: R₅₀/R₂₀ is greater than or equal to 2.5, and R₈₀/R₂₀ is greater than or equal to 8.

In some specific implementations, the self-temperature-limiting heating body is a self-temperature-limiting heating film or a self-temperature-limiting ceramic heating sheet.

In the present invention, an A-grade flame retardant material is an A-grade incombustible building material specified in Chinese National Standard GB8624-2012.

In the present invention, the "self-temperature-limiting heating body" is characterized in that resistance of the heating body is increased along with a rise of a temperature, and the resistance is increased to almost block a current after a certain temperature is reached, such that the heating body achieves an automatic temperature limitation effect.

In the present invention, "R₅₀" refers to a resistance value at 50°C, "R₈₀" refers to a resistance value at 80°C, and "R₂₀" refers to a resistance value at 20°C.

In some specific implementations, a thickness of the electric heating board is 5-20mm, and density of the electric heating board is less than or equal to 1,000kg/m³, such that the whole electric heating board is thin, light, and quite suitable for wall surface heating renovation or ceiling heating renovation.

In some specific implementations, the metal board includes a first layer, a core layer and a second layer arranged in sequence, the core layer has the hole structure, or the hole structure is formed between the core layer and the first layer and/or the second layer; preferably, the core layer is a honeycomb core layer or a core layer formed by stamping a metal sheet into a concave-convex structure, thicknesses of the first layer and the second layer are 0.1-2mm respectively, and a thickness of the core layer is 1-25mm; more preferably, a thickness of the metal board is 3-15mm, and a hole diameter of the honeycomb core layer is 2-8mm. Specifically, the thickness of the metal board is 3mm, 4mm, 5mm, 6mm, 7mm, 8mm, 9mm, 10mm, 11mm, or the like.

In some specific implementations, the conductive shielding layer includes a conductive shielding body layer and a resin layer selectively compounded with the conductive shielding body layer, and the resin layer is attached to the heating body;
the conductive shielding body layer is made of one or more of aluminum, copper, iron, nickel, zinc, alloy or graphite, a carbon nanotube, graphene and carbon black, and a thickness of the conductive shielding layer is 0.5-80µm.

In some specific implementations, the bottom layer is made of a metal board, a glass board, a rock crystal board, a calcium silicate board, a rock wool board or a ceramic board, and has a thickness of 0.2-5mm.

In some specific implementations, the heat preservation layer is made of a polyurethane heat preservation board, an XPS heat preservation board, CR foam, XPE heat preservation cotton, a nano-microporous membrane, a vacuum heat insulation board or aerogel, and a heat conductivity coefficient of the heat preservation layer is 0.005-0.1W/(m•K).

In some specific implementations, the electric heating board further includes a frame provided at a periphery of the board body, and the frame is a metal frame.

A second technical solution adopted in the present invention is as follows: an electric heating board includes a board body, wherein the board body includes a bottom layer, a surface layer and a heating body arranged between the bottom layer and the surface layer, and the surface layer is an A-grade flame retardant material layer and is formed by a metal board or a non-metal board;
the non-metal board is a glass board, a rock crystal board, a calcium silicate board, a rock wool board or a ceramic board;
when the surface layer is made of a metal board, the board body further includes a conductive shielding layer arranged between the surface layer and the heating body.

Further, the metal board is made of aluminum, iron, stainless steel, galvanized steel, copper, nickel, tin or alloy.

According to some implementation aspects of the present invention, a hole structure is formed in the surface layer.

In some specific implementations, a thickness of the surface layer is 0.5-30mm, preferably, the thickness of the surface layer is 2-30mm, and more preferably, the thickness of the surface layer is 3-15mm.

Further, the surface layer includes a first layer, a core layer and a second layer which are sequentially stacked, the core layer has the hole structure, or the hole structure is formed between the core layer and the first layer and/or the second layer; preferably, thicknesses of the first layer and the second layer are 0.1-2mm respectively, and a thickness of the core layer is 1-25mm; more preferably, the thickness of the first layer is greater than or equal to 0.5mm and less than or equal to 2mm, the thickness of the second layer is greater than 0.1mm and less than or equal to 2mm, and the thickness of the core layer is greater than or equal to 3mm and less than or equal to 10mm.

In some specific implementations, the first layer, the core layer and the second layer are made of metal, and the core layer is a honeycomb core layer or a core layer formed by stamping a metal sheet into a concave-convex structure; preferably, materials of the first layer, the core layer and the second layer are independently selected from aluminum, iron, stainless steel and galvanized steel respectively.

Specifically, the surface layer is made of a honeycomb metal board or a metal three-dimensional board, such as a honeycomb aluminum board, a honeycomb iron board, a honeycomb stainless steel board, a honeycomb galvanized steel board, an aluminum three-dimensional board, or the like.

In some specific implementations, the conductive shielding layer includes a conductive shielding body layer and a resin layer selectively compounded with the conductive shielding body layer, the conductive shielding body layer is made of one or more of aluminum, copper, iron, nickel, zinc, alloy or graphite, a carbon nanotube, graphene and carbon black, and a thickness of the conductive shielding layer is 0.1-100µm. Preferably, the thickness of the conductive shielding layer is 0.5-80µm.

In some specific embodiments, the conductive shielding layer includes a conductive shielding body layer and a resin layer compounded with the conductive shielding body layer, the resin layer is attached to the heating body, and the resin layer is made of acrylic resin, polyurethane resin, or the like.

For example, the conductive shielding layer may be made of aluminum foil tape.

In some specific implementations, the board body further includes an insulation layer provided between the surface layer and the conductive shielding layer.

In some specific embodiments, the insulation layer is independently made of a polyester film, a polyimide film, a silicone rubber or natural vulcanized/semi-vulcanized rubber film, an epoxy board, a mica board, a polytetrafluoroethylene/polyvinylidene fluoride film, a polyethylene film, a polypropylene film, or a polyvinyl chloride film.

In some specific embodiments, the insulation layer and the conductive shielding layer, the conductive shielding layer and the heating body, and the insulation layer and the surface layer are fixed in one or more of an uncured adhesive bonding mode, a heat conduction material bonding mode, a fully cured resin bonding mode and a physical pressing mode. Further, a uncured adhesive is an acrylic resin adhesive, a silica gel adhesive or a polyurethane adhesive; fully cured resin is conventional crosslinked resin, such as epoxy resin, acrylic resin, polyurethane resin, polyurea resin, fluorocarbon resin, polyester resin, vinyl ester resin, alkyd resin, or the like; a heat conduction material is heat conduction silicone grease.

In some specific implementations, the bottom layer is an A-grade flame retardant material layer.

Preferably, the bottom layer is made of a metal board, a glass board, a rock crystal board, a calcium silicate board, a rock wool board or a ceramic board, and has a thickness of 0.1-10mm. Excellent flame retardance is provided, and strength of the electric heating board can be improved.

Further preferably, the thickness of the bottom layer is 0.5-5mm. Still further preferably, the thickness of the bottom layer is 0.5-3mm.

In some specific implementations, power density of the heating body is 100W/m²-1,500W/m²; a voltage range is 12-380V; the heating body is a constant power heating film, a resistance wire or a self-temperature-limiting heating body. Preferably, the heating body is a self-temperature-limiting heating body.

Further, the power density is 150W/m²-1,000W/m². Still further, the power density is 200W/m²-800W/m².

Preferably, the self-temperature-limiting heating body is made of a self-temperature-limiting heating film or a self-temperature-limiting ceramic heating sheet, and PTC strength of the self-temperature-limiting heating body is as follows: R₅₀ (resistance at 50°C)/R₂₀ is greater than or equal to 1; more preferably, the PTC strength is as follows: R₅₀/R₂₀ is greater than or equal to 2.5, and R₈₀/R₂₀ is greater than or equal to 8.

Further, the heating body includes a first packaging insulation layer, a second packaging insulation layer, as well as a carbon film and a patterned metal electrode layer packaged between the first packaging insulation layer and the second packaging insulation layer, and the metal electrode layer is formed by performing processes of etching, die cutting, or the like, on patterned aluminum foil, patterned copper foil, a patterned nickel-chromium alloy sheet or a patterned stainless steel sheet, or is a conductive silver electrode and a conductive copper electrode formed by screen printing. The carbon film is one or a mixture of several of a carbon nanotube, conductive carbon black, graphene, graphite or chopped carbon fiber powder, and is a conductive film formed by performing direct CVD deposition, or a conductive film formed by performing melt blending on the foregoing material, a polymer auxiliary and other auxiliaries including phase-change materials, or the like, or a conductive film formed by performing dispersing blending on the foregoing material, a polymer solution, a phase-change material, a leveling agent, a defoaming agent, or the like, coating or printing the mixture to form a film and drying the film, or a conductive film prepared by scattering the foregoing material, synthetic fibers or natural fibers with a paper-making process. The carbon nanotube is preferably selected for the carbon film.

In some specific implementations, the board body further includes a heat preservation layer arranged between the heating body and the bottom layer, and a heat conductivity coefficient of the heat preservation layer is less than or equal to 0. 1W/(m•K); further, the heat conductivity coefficient is 0.005-0.1W/(m•K), such that heat loss can be effectively prevented.

The heat preservation layer is made of a polyurethane heat preservation board, an XPS heat preservation board, CR foam, XPE heat preservation cotton, a nano-microporous membrane, a vacuum heat insulation board or aerogel.

In some implementations, the electric heating board further includes a plug electrically connected with the heating body.

In some specific implementations, the electric heating board further includes a frame provided at a periphery of the board body, and the frame is a metal frame or an inorganic non-metal frame. The frame is made of aluminum alloy, stainless steel, galvanized steel, copper, iron, nickel, tin, or the like. The board body and the frame are fixed together by screws or buckles.

In some specific embodiments, the metal frame has a thickness of 5-50mm, a width of 5-25mm and a length of 0.5-3.2m and is supported by transverse metal strips arranged at an interval of 100+10cm in a length direction.

In some specific embodiments, the frame is a metal frame, and the frame is provided with a grounding column for reliable grounding. When a plurality of electric heating boards are mounted, the frame of at least one electric heating board is provided with the grounding column, and the frames of two adjacent electric heating boards are connected by a metal sheet to guarantee grounding reliability of each electric heating board.

In some other specific embodiments, the bottom layer or the surface layer is a metal component, and an inner surface of the bottom layer or the surface layer is provided with a grounding column for reliable grounding.

In some other specific embodiments, the bottom layer and the surface layer are both metal components, and an inner surface of at least one of the bottom layer and the surface layer is provided with a grounding column for reliable grounding.

In some specific implementations, one of two opposite sides of the frame is provided with a convex portion, the other side of the frame is provided with a concave portion, and when a plurality of electric heating boards are mounted, the convex portions are inserted into the concave portions, so as to avoid that the frames of two adjacent electric heating boards are separated during expansion caused by heat and contraction caused by cold.

In some implementations, the surface layer is made of a metal board, one of two opposite sides of the surface layer is provided with a convex portion, the other side of the surface layer is provided with a concave portion, and when a plurality of electric heating boards are mounted, the convex portion of one of two adjacent electric heating boards is inserted into the concave portion of the other electric heating board.

In some other implementations, the surface layer is made of a metal board, the surface layer includes a surface body and a folded portion integrally formed at a side edge of the surface body along a circumferential direction of the surface body, and an accommodating cavity is formed between the surface body and the folded portion.

In some specific implementations, the bottom layer, the heating body and the conductive shielding layer constitute a prefabricated heating body, and the prefabricated heating body and the surface layer are fixed in one or more of an uncured adhesive bonding mode, a heat conduction material bonding mode, a fully cured resin bonding mode and a physical pressing mode.

In some specific implementations, the heating body and the bottom layer are fixed together by an adhesive, or the heating body and the bottom layer are fixed together by the frame.

In some specific implementations, the heat preservation layer also serves as a part of the prefabricated heating body; the insulation layer also serves as a part of the prefabricated heating body.

In some specific implementations, a thickness of the electric heating board is 5-20mm, and density of the electric heating board is less than or equal to 1,000kg/m³.

A third technical solution adopted in the present invention is as follows: an electric heating system includes the above electric heating board.

The electric heating system includes a plurality of electric heating boards, a controller and a conducting component for connecting the electric heating boards and the controller.

The conducting component includes a connecting wire electrically connected with the controller and a plurality of interfaces which are arranged on the connecting wire and can be matched with the plugs of the electric heating boards.

In use, a power source is switched on, and a heating temperature is controlled by the controller, such that a temperature of the surface layer is kept at 30-60°C to realize heating.

Due to the application of the above technical solution, compared with the prior art, the present invention has the following advantages.

The electric heating board according to the present invention is particularly suitable for wall surface heating renovation or ceiling heating renovation, is convenient to construct, has an excellent flame retardant effect, is not prone to deformation, such as hollowing, or the like, after used for a long time, and further fundamentally solves the problem of tripping of a leakage protector caused by an overlarge leakage current.

The electric heating board according to the present invention meets a market demand for the high-flame-retardant-performance electric heating board, and is not prone to deformation, such as hollowing, or the like, after used for a long time, such that service life, user experience, stability and reliability of the electric heating board are improved, and the market demand for the efficient, safe and stable electric heating board is met.

### BRIEF DESCRIPTION OF THE DRAWINGS

FIG. 1 is a full section view of an electric heating board according to a first embodiment;
FIG. 2 is a schematic structural diagram of a heating body of the electric heating board according to the first embodiment;
FIG. 3 is a schematic structural diagram of the electric heating board according to the first embodiment mounted on a wall;
FIG. 4 is a schematic wiring diagram of the electric heating board according to the first embodiment;
FIG. 5 is a schematic structural diagram of a connecting wire and an interface in FIG. 4;
FIG. 6 is a schematic structural diagram of a plug in FIG. 4;
FIG. 7 is a rear view of the electric heating board according to the first embodiment;
FIG. 8 is a schematic structural diagram of the electric heating board according to the first embodiment mounted on a ceiling;
FIG. 9 is a full section view of an electric heating board according to a second embodiment;
FIG. 10 is a schematic diagram of a mounting state of a surface layer of an electric heating board according to a third embodiment;
FIG. 11 is a schematic structural diagram of a surface layer of an electric heating board according to a fourth embodiment;
FIG. 12 is a schematic structural diagram of a honeycomb board adopted by the surface layer of the electric heating board according to the fourth embodiment; and
FIG. 13 is a schematic diagram of a mounting structure of the electric heating board according to the fourth embodiment.

In the drawings: 100. electric heating board; 200. wall; 300. fixing frame; 400. ceiling;
1. bottom layer; 2. heat preservation layer; 3. heating body; 31. first insulation packaging layer; 32. second insulation packaging layer; 33. carbon film; 34. electrode; 4. conductive shielding layer; 5. frame; 6. insulation layer; 7. surface layer; 71. surface body; 72. folded portion; 8. connecting wire; 9. plug; 10. wiring column; 11. interface; 12. convex portion; 13. concave portion; 14. groove; 15. connecting piece.

### DETAILED DESCRIPTION

The present invention is further described below with reference to the drawings and specific embodiments.

### First Embodiment

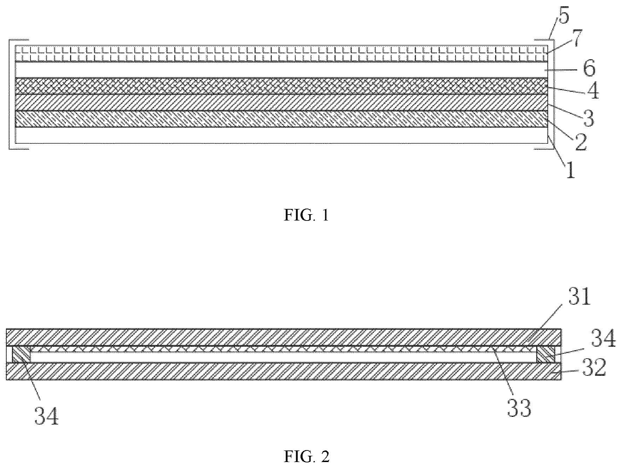

Referring to FIGS. 1 to 2, an electric heating board 100 according to the present embodiment includes a board body and a frame 5 enclosing the board body, and the board body includes a bottom layer 1, a heat preservation layer 2, a heating body 3, a conductive shielding layer 4, an insulation layer 6 and a surface layer 7 which are sequentially arranged.

The surface layer 7 is made of a honeycomb aluminum board, reaches an A-grade flame retardant performance, can strengthen stability and a soundproof effect of the electric heating board, and solves the problem of deformation, such as hollowing, or the like, of the electric heating board. Service life and user experience of the electric heating board are improved, and market demands for the high-quality, stable and reliable electric heating board are met.

For example, the honeycomb aluminum board has a thickness of 5mm and a hole diameter of 5mm; specifically, the honeycomb aluminum board includes a first layer, a honeycomb core layer and a second layer arranged in sequence, a thickness of the first layer is 0.6mm, and a thickness of the second layer is 0.4mm, such that the honeycomb aluminum board has sufficient intensity.

The bottom layer 1 is also made of an A-grade flame retardant material, such as an aluminum board, and a thickness is 1mm; the frame 5 is an aluminum frame, specifically, an aluminum frame with a thickness of 15mm, a width of 10mm, a length of 1m and a height of 2m, and transverse aluminum strips are added at an interval of 100cm in a length direction for supporting.

The heating body 3 is arranged between the honeycomb aluminum board and the aluminum board of the bottom layer 1, and meanwhile, a periphery is fixed by the metal aluminum frame, thus effectively solving the problem that an existing electric heating board cannot realize A-grade fire retardance, greatly improving security of the electric heating board, and meeting a market demand for the electric heating board with a high flame retardant performance.

The arrangement of the conductive shielding layer 4 between the honeycomb aluminum board and the heating body 3 can effectively solve the problem of a leakage current caused by a metal surface layer, thus avoiding that the leakage current is overlarge to cause tripping of a leakage protector.

For example, the conductive shielding layer 4 is made of aluminum foil and has a thickness of 0.05mm; the insulation layer 6 is made of, for example, a PET film; the surface layer 7 and the insulation layer 6, the conductive shielding layer 4 and the insulation layer 6, as well as the conductive shielding layer 4 and the heating body 3 are bonded by an adhesive, and the adhesive may be an uncured adhesive, such as an acrylic resin adhesive, a silica gel adhesive and a polyurethane adhesive.

The heating body 3 may be made of a commercially available planar heating film, such as a constant power heating film or a self-temperature-limiting heating film, the self-temperature-limiting heating film can avoid a local overheating problem caused by coverage overheating, and PTC strength of the self-temperature-limiting heating film is as follows: R₅₀ (resistance at 50°C)/R₂₀ is greater than or equal to 1, and R₈₀/R₂₀ is greater than or equal to 8.

Referring to FIG. 2, the heating body 3 includes a first insulation packaging layer 31, a second insulation packaging layer 32, as well as a carbon film 33 and a patterned metal electrode layer 34 packaged between the first insulation packaging layer 31 and the second insulation packaging layer 32, the carbon film 33 and the electrode layer 34 are in contact, and the electrode layer 34 is formed by performing etching, die cutting and other processes on a metal sheet; for example, the electrode layer 34 is a copper electrode layer. The carbon film 33 may be formed by dispersing one or more of a carbon nanotube, carbon black, graphene, graphite, and chopped carbon fiber powder, blending a product with a film-forming polymer, and then performing coating or printing. The carbon nanotube is preferable, and a heat efficiency of the heating body 3 can be guaranteed.

Heating power density of the heating body 3 is 200W/m²-800W/m², specifically 450W/m² or 700W/m², a working voltage thereof is AC220V, a size of the heating body 3 is 1m×2m, and a thickness thereof is 0.2mm.

The heat preservation layer 2 can be made of a heat preservation material with a heat conductivity coefficient of 0.005-0.1W/(m•K), such as a polyurethane heat preservation board, which also has a B1-grade flame retardant effect.

The electric heating board further includes a plug 9 which is electrically connected with the heating body 3 and can be called a female end.

In the present embodiment, a thickness of the electric heating board is 10mm, and density of the electric heating board is 618kg/m³.

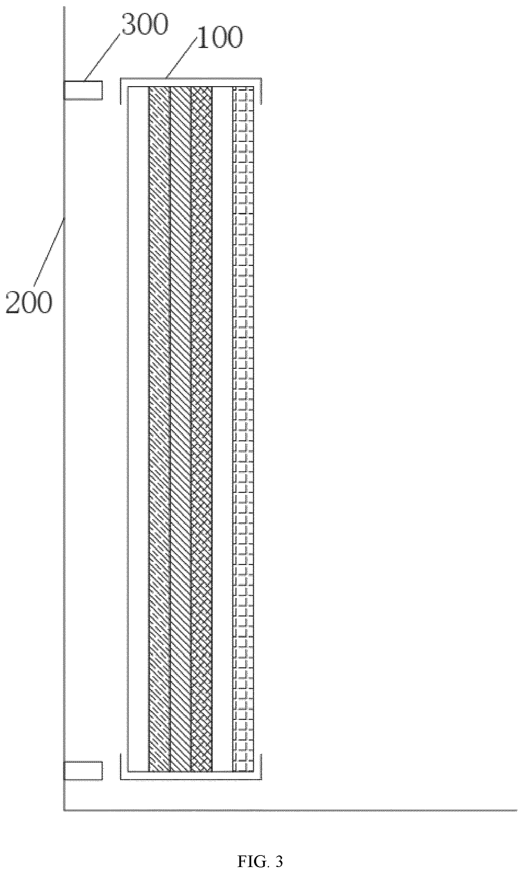

Referring to FIG. 3, the electric heating board 100 is mounted on a wall 200 by a fixing frame 300, and is used as an electric heating wallboard to form an electric heating system, so as to realize room heating.

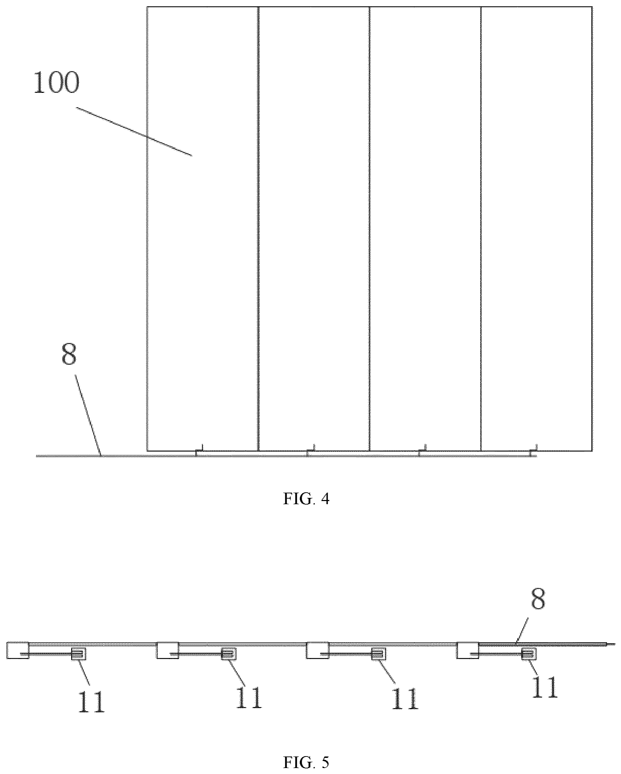

Referring to FIGS. 4 to 6, the electric heating system includes a plurality of electric heating boards, a controller and a conducting component for connecting the electric heating boards and the controller, the conducting component includes a connecting wire 8 electrically connected with the controller and a plurality of interfaces 11 (called male ends) which are arranged on the connecting wire and can be matched with the plugs 9 of the electric heating boards, and the arrangement of the male end and the female end can reduce a number of the connecting wires between the controller and the electric heating board.

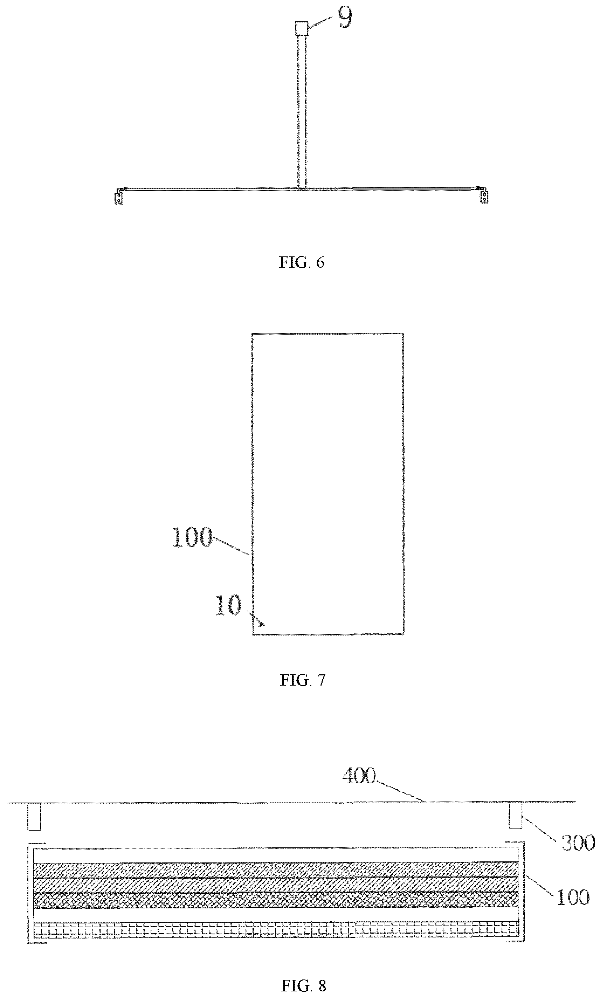

In the present embodiment, as shown in FIG. 7, inner surfaces of the surface layers 7 of the plurality of electric heating boards are provided with wiring columns 10 respectively, the wiring columns 10 are studs, the studs extend out of the bottom layers 1, the frame of the first electric heating board is also provided with a grounding column, and the wiring column 10 is connected with a grounding wire and fixes the grounding wire; specifically, the grounding wire is fixed on the grounding column 10 by a nut, the frames of the plurality of electric heating boards are connected through metal sheets, and the grounding column 10 is in contact with the wall, such that the arrangement is reliably grounded, and requirements of 3C standards are met.

For the electric heating board with the above arrangement, after a power source is switched on, the controller is turned on to enable the heating body 3 to work, such that a temperature of a surface of the honeycomb aluminum board can be kept at 30-60°C, so as to realize heating of a room.

As shown in FIG. 8, the electric heating board 100 can also be mounted on a ceiling 400 to be used as top heating; the electric heating board 100 is mounted on the ceiling 400 by a fixing frame 300 for use, and if the electric heating board is applied to a room with a suspended ceiling, the electric heating board and the original suspended ceiling can be spliced together into a whole, an indoor space is not occupied, and a utilization ratio of the indoor space is improved. Mounting is convenient, and a mounting cost can be reduced.

For the electric heating board mounted on the wall or the ceiling, in an actual use process, a convection module can also be mounted at an edge of one side or plural sides of the electric heating board, and the convection module can be a cross flow fan, can have a single-sheet arrangement or multi-sheet arrangement, and can realize indoor convection of hot air, which improves a heating effect, and meanwhile increases functions of a heating device, and meets growing demands of people.

### Second Embodiment

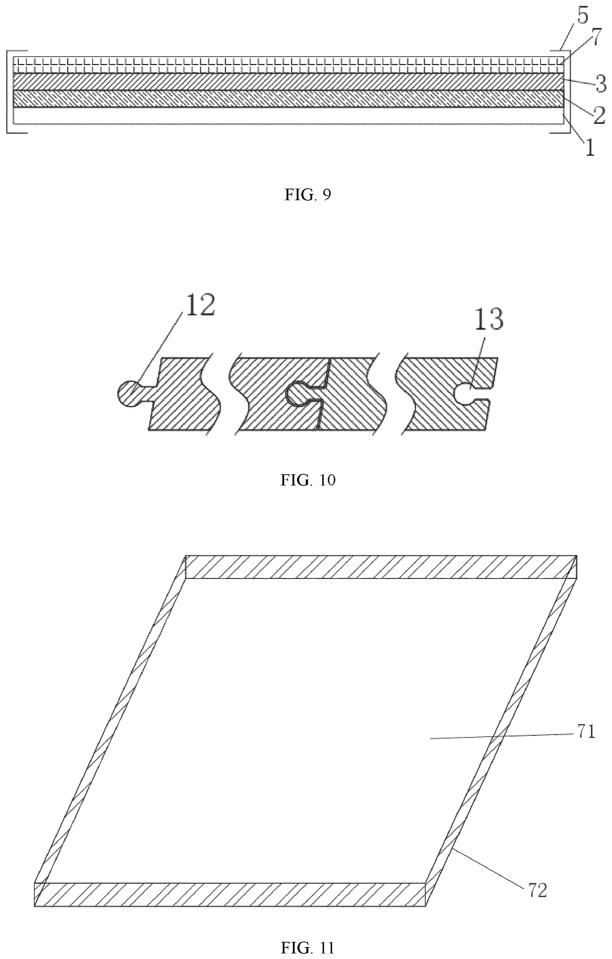

Referring to FIG. 9, the electric heating board 100 according to the present embodiment is different from the first embodiment in that: the surface layer 7 is made of a calcium silicate board, and meanwhile, the conductive shielding layer 4 and the insulation layer 6 are omitted, but the calcium silicate board is attached to the heating body 3.

The electric heating board can be widely applied to the application fields of building heating, building materials, electromagnetic shielding, or the like.

### Third Embodiment

The electric heating board according to the present embodiment has a structure basically the same as that of the first embodiment and is different from the first embodiment in that: the bottom layer, the heat preservation layer, the heating body, the conductive shielding layer and the insulation layer form a prefabricated heating body, and the heating body and the heat preservation layer as well as the heat preservation layer and the bottom layer are fixed into a whole by an adhesive, such as epoxy resin.

The surface layer 7 and the prefabricated heating body are bonded through an adhesive, such as epoxy resin.

Referring to FIG. 10, the surface layer 7 is made of a honeycomb aluminum board, one of two opposite sides of the surface layer 7 is provided with a convex portion 12, the other side of the surface layer is provided with a concave portion 13, and when a plurality of electric heating boards are mounted, the convex portion 12 of one of two adjacent electric heating boards is inserted into the concave portion 13 of the other electric heating board, such that only the surface layer of the electric heating board can be seen from the front, other structures cannot be seen, and the product is more attractive and better conforms to modern aesthetic appreciation of people.

Selection of the bottom layer, the heat preservation layer, the heating body, the conductive shielding layer, and the insulation layer in the present embodiment can be the same as selection in the first embodiment.

### Fourth Embodiment

The electric heating board according to the present embodiment is substantially the same as the third embodiment, and is different from the third embodiment in that: referring to FIG. 11, the surface layer 7 includes a surface body 71 and a folded portion 72 integrally formed at a side edge of the surface body 71 along a circumferential direction of the surface body 71, an accommodating cavity is formed between the surface body 71 and the folded portion 72, and the prefabricated heating body is provided in the accommodating cavity.

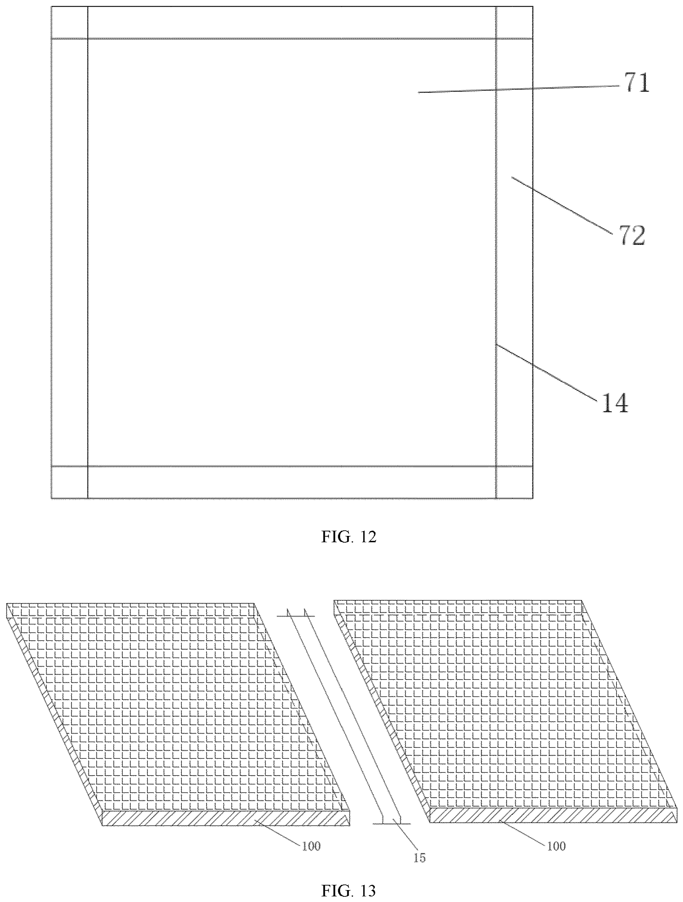

The surface layer 7 may be made of a single honeycomb aluminum board, and as shown in FIG. 12, for example, grooves 14 are formed along sides of the honeycomb aluminum board at a certain distance from edges, and then, each side is folded along the groove 14 to form the folded portion 72.

When a plurality of electric heating boards are mounted, referring to FIG. 13, the folded portions 72 of the surface layers 7 of two adjacent electric heating boards are attached to each other and then connected by a connecting piece 15, for example, buckled by concave buckle strips, such that only the surface layer of the electric heating board can be seen from the front, other structures cannot be seen, and a more attractive effect is achieved.

### Fifth Embodiment

The electric heating board according to the present embodiment is substantially the same as the fourth embodiment, and is different from the fourth embodiment in that: the surface layer 7 is made of an aluminum three-dimensional board, and includes a first layer, a core layer and a second layer which are sequentially stacked, the core layer is formed by stamping a metal sheet into a concave-convex structure, and a cross section of the core layer is wavy.

In summary, the embodiments with the above arrangements have the following advantages.
1) The heating body is arranged between the metal surface layer and the metal bottom layer, and a periphery is fixed by the metal frame, thus effectively solving the problem that an existing electric heating board cannot realize A-grade fire retardance, greatly improving a security performance of the electric heating board, and meeting a market demand for the electric heating board with a high flame retardant performance; the self-temperature-limiting heating body is adopted, thus further improving safe use of the electric heating board.
2) The surface layer is made of a honeycomb metal board or a metal three-dimensional board, thus effectively avoiding the hollowing, improving the service life and the user experience of the product, and meeting the market demand for the high-quality, stable and reliable electric heating board.
3) The conductive shielding layer is additionally provided between the metal surface layer and the heating body, thus effectively solving the problem that the leakage current of a distributed capacitor is overlarge to cause tripping of the leakage protector, improving the stability and the reliability of the electric heating board, and satisfying the market demand for the efficient, safe and stable electric heating board.
4) The electric heating board can be flexibly mounted, is not limited by a position, and can be mounted on the wall or the ceiling, and the whole electric heating board is thin, light and convenient to construct.
5) Components, such as the heating body, the heat preservation layer and the bottom layer, are fixed to constitute the prefabricated heating body, and then, the structure of the surface layer is optimized, such that when the electric heating board is mounted, only the surface layer of the electric heating board can be seen from the front, other structures cannot be seen, and the product is more attractive and better conforms to modern aesthetic appreciation of people.

The above-mentioned embodiments are merely illustrative of the technical concepts and features of the present invention, and are intended to enable those skilled in the art to understand the contents of the present invention and implement the present invention, and not to limit the protection scope of the present invention. All equivalent changes and modifications made according to the spirit of the present invention should be covered in the protection scope of the present invention.

The endpoints and any value of the ranges disclosed herein are not limited to the precise range or value, and these ranges or values should be understood to encompass values close to these ranges or values. For numerical ranges, endpoint values of each range, endpoint values and individual point values of each range, and individual point values can be combined with each other to obtain one or more new numerical ranges, and such numerical ranges should be construed as specifically disclosed herein.

## Claims

1. An electric heating board, comprising a board body, **characterized in that** the board body comprises a bottom layer, a heat preservation layer, a self-temperature-limiting heating body, a conductive shielding layer, an insulation layer and a surface layer which are sequentially arranged, the surface layer is an A-grade flame retardant material layer and is formed by a metal board, and a hole structure is formed inside the metal board; the bottom layer is an A-grade flame retardant material layer.

2. The electric heating board according to claim 1, **characterized in that** power density of the self-temperature-limiting heating body is 100W/m²-1,500W/m², and PTC strength of the self-temperature-limiting heating body is as follows: R₅₀/R₂₀ is greater than or equal to 1; preferably, the power density of the self-temperature-limiting heating body is 200W/m²-800W/m², and the PTC strength is as follows: R₅₀/R₂₀ is greater than or equal to 2.5; and/or the self-temperature-limiting heating body is a self-temperature-limiting heating film or a self-temperature-limiting ceramic heating sheet.

3. The electric heating board according to claim 1, **characterized in that** a thickness of the electric heating board is 5-20mm, and density of the electric heating board is less than or equal to 1,000kg/m³.

4. The electric heating board according to any one of claims 1 to 3, **characterized in that** the metal board comprises a first layer, a core layer and a second layer arranged in sequence, the core layer has the hole structure, or the hole structure is formed between the core layer and the first layer and/or the second layer; preferably, the core layer is a honeycomb core layer or a core layer formed by stamping a metal sheet into a concave-convex structure, thicknesses of the first layer and the second layer are 0.1-2mm respectively, and a thickness of the core layer is 1-25mm; more preferably, a thickness of the metal board is 3-15mm, and a hole diameter of the honeycomb core layer is 2-8mm.

5. The electric heating board according to any one of claims 1 to 3, **characterized in that** the conductive shielding layer comprises a conductive shielding body layer and a resin layer selectively compounded with the conductive shielding body layer, and the resin layer is attached to the heating body;
the conductive shielding body layer is made of one or more of aluminum, copper, iron, nickel, zinc, alloy or graphite, a carbon nanotube, graphene and carbon black, and a thickness of the conductive shielding layer is 3-80µm; and/or
the bottom layer is made of a metal board, a glass board, a rock crystal board, a calcium silicate board, a rock wool board or a ceramic board, and has a thickness of 0.5-5mm; and/or
the heat preservation layer is made of a polyurethane heat preservation board, an XPS heat preservation board, CR foam, XPE heat preservation cotton, a nano-microporous membrane, a vacuum heat insulation board or aerogel, and a heat conductivity coefficient of the heat preservation layer is 0.005-0.1W/(m•K); and/or
the electric heating board further comprises a frame provided at a periphery of the board body, and the frame is a metal frame.

6. An electric heating board, comprising a board body, the board body comprises a bottom layer, a surface layer and a heating body arranged between the bottom layer and the surface layer, **characterized in that** the surface layer is an A-grade flame retardant material layer and is formed by a metal board or a non-metal board;
the non-metal board is a glass board, a rock crystal board, a calcium silicate board, a rock wool board or a ceramic board;
when the surface layer is made of a metal board, the board body further comprises a conductive shielding layer arranged between the surface layer and the heating body.

7. The electric heating board according to claim 6, **characterized in that** a hole structure is formed inside the surface layer; and/or a thickness of the surface layer is 0.5-30mm; and/or the heating body is a self-temperature-limiting heating body.

8. The electric heating board according to claim 7, **characterized in that** the thickness of the surface layer is 2-30mm;
the surface layer comprises a first layer, a core layer and a second layer which are sequentially stacked, the core layer has the hole structure, or the hole structure is formed between the core layer and the first layer and/or the second layer; preferably, thicknesses of the first layer and the second layer are 0.1-2mm respectively, and a thickness of the core layer is 1-25mm; more preferably, the thickness of the first layer is greater than or equal to 0.5mm and less than or equal to 2mm, the thickness of the second layer is greater than 0.1mm and less than or equal to 2mm, and the thickness of the core layer is greater than or equal to 3mm and less than or equal to 10mm.

9. The electric heating board according to claim 8, **characterized in that** the first layer, the core layer and the second layer are made of metal, and the core layer is a honeycomb core layer or a core layer formed by stamping a metal sheet into a concave-convex structure; preferably, materials of the first layer, the core layer and the second layer are independently selected from aluminum, iron, stainless steel and galvanized steel respectively.

10. The electric heating board according to claim 6, **characterized in that** the conductive shielding layer comprises a conductive shielding body layer and a resin layer selectively compounded with the conductive shielding body layer, and the resin layer is attached to the heating body;
the conductive shielding body layer is made of one or more of aluminum, copper, iron, nickel, zinc, alloy or graphite, a carbon nanotube, graphene and carbon black, and a thickness of the conductive shielding layer is 0.1-100µm;
the resin layer is made of acrylic resin or polyurethane resin.

11. The electric heating board according to claim 10, **characterized in that** the board body further comprises an insulation layer provided between the surface layer and the conductive shielding layer; preferably, the insulation layer is independently made of a polyester film, a polyimide film, a silicone rubber film, a natural vulcanized rubber film, a semi-vulcanized rubber film, an epoxy board, a mica board, a polytetrafluoroethylene film, a polyvinylidene fluoride film, a polyethylene film, a polypropylene film, or a polyvinyl chloride film.

12. The electric heating board according to claim 11, **characterized in that** the insulation layer and the conductive shielding layer, the conductive shielding layer and the heating body, and the insulation layer and the surface layer are fixed in one or more of an uncured adhesive bonding mode, a heat conduction material bonding mode, a fully cured resin bonding mode and a physical pressing mode.

13. The electric heating board according to claim 6, **characterized in that** the bottom layer is an A-grade flame retardant material layer, and the bottom layer is made of a metal board, a glass board, a rock crystal board, a calcium silicate board, a rock wool board or a ceramic board, and has a thickness of 0.1-10mm; and/or
power density of the heating body is 100W/m²-1,500W/m²; a voltage range is 12-380V; and/or
the heating body is a constant power heating film, a resistance wire, a self-temperature-limiting heating film or a self-temperature-limiting ceramic heating sheet; preferably, the heating body is a self-temperature-limiting heating film or a self-temperature-limiting ceramic heating sheet, and PTC strength of the self-temperature-limiting heating body is as follows: R₅₀/R₂₀ is greater than or equal to 1; and/or
the board body further comprises a heat preservation layer arranged between the heating body and the bottom layer, and a heat conductivity coefficient of the heat preservation layer is less than or equal to 0.1W/(m•K); the heat preservation layer is made of a polyurethane heat preservation board, an XPS heat preservation board, CR foam, XPE heat preservation cotton, a nano-microporous membrane, a vacuum heat insulation board or aerogel; and/or
the electric heating board further comprises a frame provided at a periphery of the board body, and the frame is a metal frame or an inorganic non-metal frame; and/or
the electric heating board further comprises a plug electrically connected with the heating body; and/or
a thickness of the electric heating board is 5-20mm, and density of the electric heating board is less than or equal to 1,000kg/m³.

14. The electric heating board according to claim 6, **characterized in that** the electric heating board further comprises a frame provided at a periphery of the board body, and the frame is a metal frame, and the frame is provided with a grounding column for reliable grounding.

15. The electric heating board according to claim 6, **characterized in that** the bottom layer or the surface layer is a metal component, and an inner surface of the bottom layer or the surface layer is provided with a grounding column for reliable grounding; or the bottom layer and the surface layer are both metal components, and an inner surface of at least one of the bottom layer and the surface layer is provided with a grounding column for reliable grounding.

16. The electric heating board according to claim 6, **characterized in that** the surface layer is made of a metal board, one of two opposite sides of the surface layer is provided with a convex portion, the other side of the surface layer is provided with a concave portion, and when a plurality of electric heating boards are mounted, the convex portion of one of two adjacent electric heating boards is inserted into the concave portion of the other electric heating board.

17. The electric heating board according to claim 6, **characterized in that** the surface layer is made of a metal board, the surface layer comprises a surface body and a folded portion integrally formed at a side edge of the surface body along a circumferential direction of the surface body, and an accommodating cavity is formed between the surface body and the folded portion.

18. The electric heating board according to claim 16 or 17, **characterized in that** the bottom layer, the heating body and the conductive shielding layer are fixed together to constitute a prefabricated heating body, and the prefabricated heating body and the surface layer are fixed in one or more of an uncured adhesive bonding mode, a heat conduction material bonding mode, a fully cured resin bonding mode and a physical pressing mode.

19. The electric heating board according to claim 18, **characterized in that** the heating body and the bottom layer as well as the heating body and the conductive shielding layer are fixed together by an adhesive, or the bottom layer, the heating body and the conductive shielding layer are fixed together by the frame; and/or
the electric heating board further comprises a heat preservation layer arranged between the heating body and the bottom layer, and the heat preservation layer also serves as a part of the prefabricated heating body; and/or
the electric heating board further comprises an insulation layer attached to the conductive shielding layer, the insulation layer is located between the conductive shielding layer and the surface layer, and the insulation layer also serves as a part of the prefabricated heating body.

20. Use of the electric heating board according to any one of claims 1 to 19 in wall or ceiling heating renovation.

21. An electric heating system, comprising the electric heating board according to any one of claims 1 to 20.

22. The electric heating system according to claim 21, **characterized in that** the electric heating system comprises a plurality of electric heating boards, a controller and a conducting component for connecting the electric heating boards and the controller.
